# NEUE EUROPÄISCHE PATENTSCHRIFT

(11) **EP 2 060 472 B2**
(45) Veröffentlichungstag und Bekanntmachung des Hinweises auf die Entscheidung über den Einspruch: **01.02.2017**
(45) Hinweis auf die Patenterteilung: 06.04.2011
(21) Anmeldenummer: 08000600.0
(22) Anmeldetag: 14.01.2008
(51) Int. Cl.: B62D 1/28, B62D 15/02, B66C 19/00, B66F 9/06, B66C 13/48

(54) **Portalhubstapler mit automatischer Lenkung**
Portal fork lift with automatic steering
Chariot cavalier doté d'une direction automatique

(30) Priorität: 16.11.2007 DE 202007016156 U
(43) Veröffentlichungstag der Anmeldung: 20.05.2009
(73) Patentinhaber: Terex MHPS IP Management GmbH, 40597 Düsseldorf (DE)
(72) Erfinder: Bauer, Reinhard, 97280 Remlingen (DE)
(74) Vertreter: Hofmann, Matthias

(56) Entgegenhaltungen:
- WO-A-02/34663
- WO-A1-95/31759
- WO-A1-98/34127
- DE-A1- 3 606 363
- DE-A1- 19 916 999
- US-A- 5 757 501
- US-A1- 2006 115 113
- US-B1- 6 571 172

## Beschreibung

Die Erfindung betrifft einen Portalhubstapler nach dem Oberbegriff des ersten Anspruches.

Der vorgeschlagene Portalhubstapler ist geeignet für den Umschlag von Containern, bei dem die Notwendigkeit besteht, das Fahrzeug präzise und sicher automatisch an Containerstapeln entlang zu lenken.

Die Erfindung betrifft einen Portalhubstapler (Straddle Carrier), wie sie weltweit in Seehäfen und Containerterminals zum Transportieren und Stapeln von Frachtcontainern eingesetzt werden. Sie bestehen aus zwei Fahrträgern mit Rädern, die rechts und links vom Containerstapel fahren, und darauf aufgesetzten senkrechten Stützen, die mit der darüber liegenden Maschinenbühne ein Portal bilden. Dieses Portal überfährt die Container und nimmt sie mit seinem Hubwerk auf oder setzt sie ab. Die Portalstapler haben einen dieselelektrischen oder dieselhydraulischen Antrieb und meist eine elektro-hydraulische Lenkung, wobei ein Lenkrechner nach Vorgabe des Lenkradeinschlags durch den Fahrer die hydraulischen Proportionalventile regelt, welche wiederum über Hydraulikzylinder die Räder zum Lenkeinschlag bewegen.

Die Portalstapler müssen über lange, gestapelte Containerreihen gelenkt werden, wobei die Fahrträger rechts und links vom überfahrenen Stapel in den schmalen Gassen zwischen den Containerreihen fahren. Der Fahrzeugführer muß dabei sehr präzise und aufmerksam lenken und kann auch nicht sehr schnell fahren, da der Freiraum zwischen den Fahrträgern und den Containern sehr schmal ist, und Anstreifen des Fahrzeugs an den Containern oder andere Kollisionen vermieden werden müssen. Um den Fahrer zu unterstützen und von konzentriertem, ermüdendem Lenken zu entlasten, wäre eine automatische Lenkung wünschenswert.

Automatisch gelenkte Straddle Carrier sind bekannt. Sie benutzen meist die allgemein bekannten Verfahren, wie sie zur Navigation für alle autonomen, fahrerlosen Flurförderfahrzeuge angewandt werden, nämlich Einzelsysteme oder Kombinationen aus:
- Satellitennavigation (differentielles GPS),
- Radarnavigation,
- Trägheitsnavigation (Gyroskope),
- Transpondernavigation (mit im Boden vergrabenen Marken),
- Leitdrahtnavigation
oder ähnliches. Zur vollautomatischen Lenkung müssen diese bekannten Navigationssysteme die Ortung der Fahrzeugposition im Zentimeterbereich ermöglichen, was diese sehr aufwendig macht.

Auch die Navigation mit Laserscannern ist bereits bekannt. So zeigt z. B. DE 38 21 892 C1 die Positionsbestimmung eines Fahrzeuges mit Laserscannern, wobei ortsfeste Reflektoren z. B. an den Lichtmasten des Hafengeländes installiert werden müssen, und der Laserscanner kontinuierlich Entfernungen und Winkel zu den Reflektoren mißt. Durch Vergleich mit den bekannten, in der elektronischen Fahrzeugsteuerung abgespeicherten Positionen dieser Reflektoren wird die aktuelle Fahrzeugposition bestimmt.

Eine automatische Lenkung des Fahrzeuges mit Laserscannern ist in DE 38 21 892 C1 jedoch nicht angegeben.

Weiterhin ist der Einsatz von Laserscannern für verschiedene Positionier- und Ortungsaufgaben an Kranen und Containerstaplern bekannt, z. B. durch DE 100 39 629 B4 und DE 44 15 419 A1, jedoch nicht für die automatische Lenkung eines Portalstaplers über der Containerreihe.

Alle diese bekannten Verfahren zur vollautomatischen Fahrzeugführung haben einige Nachteile: Sie müssen zentimetergenau sein und sind damit sehr aufwendig und sie orientieren sich nicht am Containerstapel selbst, sondern an externen Marken, wie Satelliten, Reflektoren, Transpondern o. ä. Von ihnen wird das Fahrzeug auf einem nur theoretischen Pfad, auf dem der Containerstapel stehen soll, entlang gelenkt. Dieser Pfad ist in der Fahrzeugsteuerung abgespeichert. Sind die Container in Wirklichkeit nicht genau auf diesem theoretischen Pfad abgesetzt, kann es zu Ansteifungen, Kollisionen, Beschädigungen und damit Betriebsunterbrechungen kommen. Außerdem müssen die Pfade jedes Mal in allen Fahrzeugsteuerungen geändert werden, wenn die Container aus logistischen Gründen anders gestapelt werden sollen, was ebenfalls softwaretechnisch recht aufwendig ist.

Ein reiner Handbetrieb durch den Fahrer wiederum hat den Nachteil, daß der Fahrer sehr aufmerksam und konzentriert das Fahrzeug über den oft mehrere hundert Meter langen Containerstapel lenken muß. Er ermüdet, verliert nach einiger Zeit die Konzentrationsfähigkeit und muß daher relativ langsam fahren, was die Umschlagleistung des Fahrzeuges begrenzt. Auch muß er zum Lenken immer senkrecht nach unten auf die Lükke zwischen Fahrträger und Containerreihe schauen und kann die voraus liegende Fahrstrecke nur schlecht beobachten.

Weiterhin kommt es häufig zu Kollisionen, wenn der Fahrer mangels Aufmerksamkeit bei Einfahrt über einen Containerstapel oder bei Annäherung an einen höher gestapelten Teil der Containerreihe das Hubwerk nicht hoch genug gefahren hat. Dann stößt der Spreader oder die Last am Spreader gegen den höher gestapelten Container, was erhebliche Schäden verursacht.

Es ist daher Aufgabe der Erfindung, die Nachteile des bekannten Standes der Technik zu beseitigen und einen Straddle Carrier mit vollautomatischer Lenkung zu entwickeln, welche sich direkt am Containerstapel orientiert, den Fahrer von konzentriertem, ermüdendem Lenken entlastet, einen Kollisionsschutz bietet und dabei ohne den großen Aufwand eines vollständigen Navigationssystems auskommt.

Die Aufgabe wird durch einen Portalhubstapler nach den Merkmalen des ersten Anspruches gelöst.

Unteransprüche geben vorteilhafte Ausgestaltungen der Erfindung wieder.

Die vorgeschlagene Lösung sieht einen Portalhubstapler zum Transportieren und Stapeln von Frachtcontainern mit automatischer Lenkung bei Fahrt über den Containerstapel vor, bei dem mindestens ein Laserscanner die Entfernung zu einer Containerwand aus verschiedenen Winkeln mißt und die Meßwinkel einer elektronischen Steuerung, welche daraus einen Lenkwinkel-Sollwert für die elektronisch geregelte Fahrzeuglenkung errechnet.

Vorteilhaft ist es, wenn der Laserscanner einen 2D-Laserscanner darstellt. Weiterhin ist es vorteilhaft, den Laserscanner vom im Fahrzeugträger anzuordnen. Selbstverständlich kann für Rückwärtsfahrten ein Laserscanner auch am Fahrzeugträger hinten angeordnet sein.

Weiterhin ist es vorteilhaft, den Laserscanner oder einen 2D-Laserscanner im Rammpuffer anzuordnen. Als Laserscanner sind robuste, handelsübliche 2D-Laserscanner geeignet. In vorteilhafter Weise können mehrere Laserscanner am Fahrzeug angeordnet sein. Um untere Containerreihen zu erkennen genügt es, im Fahrträger, vorzugsweise im Rammpuffer, etwa in Höhe von 120 cm Laserscanner anzuordnen. Damit wird in halber Höhe das erste untere Containerlager erfaßt und kann als Orientierung dienen. Jedoch können Container in Lagen von zwei, drei oder vier hoch übereinander gestapelt werden. Die Container dieser oberen Lagen werden von den unteren Laserscannern bisher nicht erfaßt. Wenn diese oberen Container nicht präzise aufeinander gestapelt sind oder durch größere Einflüsse wie Sturm versetzt wurden, so stellen diese ein Hindernis dar, an dem der Straddle Carrier anstreifen kann. Deshalb ist es vorteilhaft, weitere Laserscanner in den senkrechten Stützen des Straddle Carriers so anzubringen, daß auch diese Container erfaßbar sind, d. h. jeweils in der mittleren Höhe der zweiten, dritten oder vierten Containerlage. Damit können hervorstehende Container in den oberen Lagen als Hindernis erkannt werden, so daß das Fahrzeug rechtzeitig abgebremst-oder zum Ausweichen gelenkt wird, falls seitlich genügend Platz vorhanden ist.

Vorteilhaft kann es weiterhin sein, Laserscanner in ihrer Höhe veränderlich an den Stützen der Straddle Carrier anzuordnen, so daß die Höhe unterschiedlichen Containerhöhen anpaßbar ist. Diese Anpassung kann entlang einer Halteschiene automatisch mittels Stellmotor erfolgen.

Vorteilhaft ist es, wenn der Portalhubstapler bei Unterschreiten eines Mindestabstands zur Containerwand automatisch abbremst. Damit werden Kollisionen vermieden.

Weiterhin kann bei Detektieren der Containerwand ein akustisches oder optisches Signal, z. B. ein Blitzlicht, dem Fahrer anzeigen, daß die automatische Lenkung aktivierbar ist, so daß dieser auf diese umschaltet. Sollte das nicht per Handbetrieb erfolgen, kann bei Detektieren der Containerwand die Lenkung auch automatisch aktiviert werden.

Mittels der Laserscanner orientiert sich die Lenkung des Fahrzeuges automatisch entlang der Container. Bei größeren Lücken von 40 Fuß und mehr in der Containerreihe orientiert sich die automatische Lenkung mit dem Laserscanner an der Containerwand der jeweiligen Nebenreihe. Falls sich in dieser eine Lücke befindet, orientiert sie sich an der rechten Nebenreihe, bis die überfahrene Reihe wieder vom Laser erfaßt wird. Damit können auch größere Lücken überbrückt werden. Wenn sowohl links als auch rechts als auch in der Mitte Lücken vorhanden sind und kein Container vom Laser erfaßt werden kann, wird, wie am Ende eines Stapels, der Fahrer akustisch und optisch zur Handlenkung aufgefordert. Sofern innerhalb einer vorgegebenen Zeit, beispielsweise eine Sekunde, kein Eingriff erfolgt, wird das Fahrzeug abgebremst.

Bei mehreren übereinander angeordneten Scannern für das Erfassen mehrerer übereinander gestapelter Container, die in zwei, drei oder vier Lagen gestapelt sind, können schon in einiger Entfernung und bei Einfahrt auch um die Kurve herum Detektionen durch den Laserscanner erfolgen, wobei festgestellt wird, ob Container zwei-, drei- oder vierfach übereinander gestapelt sind. Die elektronische Hubwerkssteuerung kann dann die Stapelhöhe mit der aktuellen Hubhöhe des Spreaders, welche z. B. mit einem Absolutwert-Drehgeber an der Hubwinde erfaßt werden kann, vergleichen und prüfen, ob der Spreader und die Last hoch genug stehen, um den Containerstapel überfahren zu können. Ist dies nicht der Fall, kann eine Automatik das Hubwerk auf die erforderliche Höhe fahren. Dabei wird die Annäherungsgeschwindigkeit des Fahrwerks an den hinderlichen Container automatisch und so lange vermindert oder ganz gestoppt, bis das Hubwerk die erforderliche Höhe erreicht hat. Damit werden Kollisionen des Spreaders oder der daran angehängten Last mit gestapelten Containern automatisch vermieden.

Die Meßwerte des rechten und des linken Laserscanners werden mittels elektronischer Steuerung gegeneinander auf Plausibilität geprüft.

Im Folgenden wird die Erfindung an einem Ausführungsbeispiel und vier Figuren näher erläutert. Die Figuren zeigen:
- Figur 1:: Einen Portalhubstapler in Ansicht beim Überfahren eines Containerstapels, wobei der Laserscanner am vorderen linken Fahrträger, geschützt im Rammpuffer, angebracht ist.
- Figur 2:: Laserscanner in Figur 1.

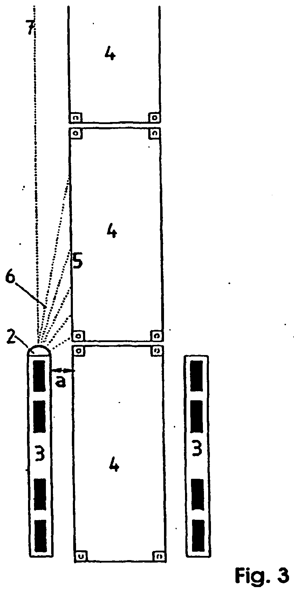

- Figur 3:: Draufsicht auf Fahrträger und Containerreihe bei Überfahren einer Container- reihe.
- Figur 4:: Blockschaltbild des automatischen Lenksystems.

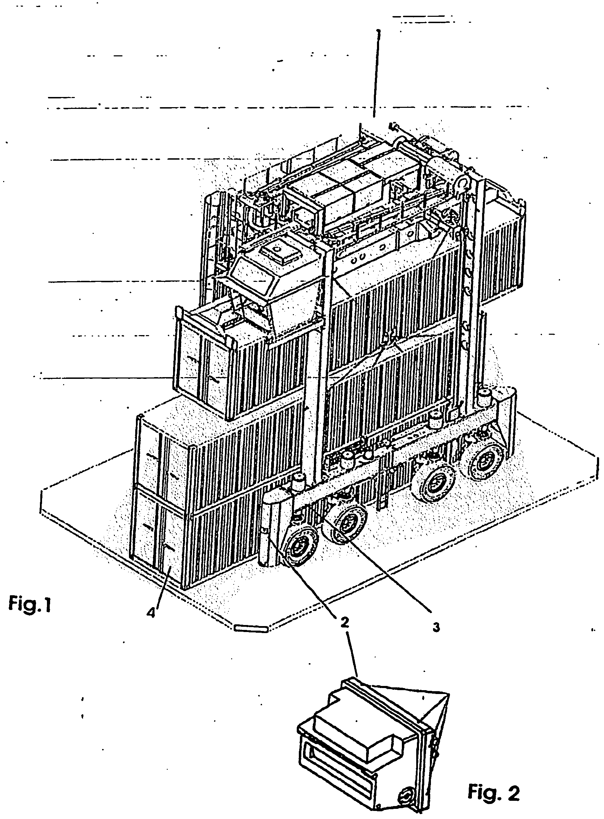

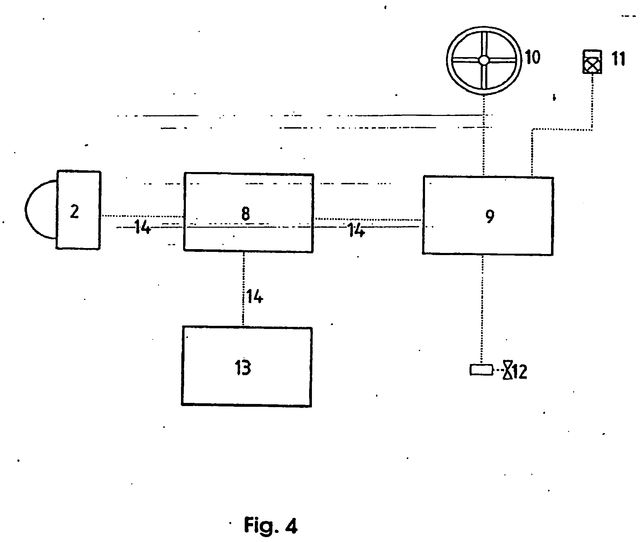

Wie die *Figur 1* zeigt, ist ein robuster 2D-Laserscanner 2, der für Anwendungen im Freien und auf Fahrzeugen geeignet ist, vorne am Fahrträger 4 des Portalstaplers 1 befestigt. Die Anbringung kann in ca. 120 cm Höhe erfolgen. Er sendet mit einem rotierenden Spiegel den Laserstrahl 6 in verschiedene horizontale Richtungen und scannt damit die Umgebung ab. An Hindernissen wie z. B. der Containerwand 5, wird der Laserstrahl zurück in den Scanner 2 reflektiert, welcher über die Laufzeit des Strahles 6 jeweils die Entfernung zum Hindernis bestimmt (Fig. 4).

Jeder Entfernungswert-wird mit dem zugehörigen Winkelwert über Datenleitungen 14 an eine elektronische Steuerung 8 übermittelt, in der somit ein horizontales 2D-Abbild der Umgebung in Polarkoordinaten vorliegt. Fährt der Portalstapler über einen Containerstapel, so werden die Laserstrahlen 6 von der Containerwand 5 als Hindernis reflektiert. Die elektronische Steuerung 8 rechnet dann nach bekannten geometrischen und trigonometrischen Formeln (welche schon im Mathematikunterricht der weiterführenden Schulen gelehrt werden und daher hier als dem Fachmann bekannt vorausgesetzt werden) die Polarkoordinaten um in cartesische Koordinaten und bestimmt daraus den Abstand a zwischen Fahrträger und Containerwand sowie den Orientierungswinkel (Kurswinkel) phi des Fahrzeuges relativ zur Containerwand.

Aus diesen-beiden-Größen kann die Elektronik 8 weiter nach bekannten Formeln der Geometrie einen Soll-Lenkwinkel zum Einschlagen der Räder errechnen. Dieser Lenkwinkel-Sollwert wird wiederum über Datenleitungen 14 (z. B. CAN-Bus) dem Lenkrechner 9 der elektrohydraulischen Lenkung übermittelt, welcher dann das Einschlagen der Räder auf diesen Lenksollwert regelt.

Das ganze erfolgt zyklisch etwa alle 100m msec. Somit wird das Fahrzeug 1 berührungslos und automatisch am Containerstapel entlang gelenkt, und zwar auch dann, wenn die Container 3 nicht präzise auf ihrer Sollposition stehen, etwas schräg stehen, oder versetzt gegeneinander sind.

Vorteilhaft ist es dabei, denjenigen Laserstrahl 7, der genau in Fahrtrichtung des Fahrzeuges ausgesandt wird, zu nutzen, um eventuelle Hindernisse in der Fahrgasse (z. B. andere Fahrzeuge oder hervorstehenden Container) automatisch zu erkennen und das Fahrzeug bei Annäherung an ein Hindernis abzubremsen. Dazu wird die gemessene Entfernung mit den allseits bekannten Bewegungsgleichungen der Newton'schen Mechanik in eine erlaubte Maximalgeschwindigkeit für das Fahrzeug umgerechnet, welche wieder über Datenleitungen 14 oder Feldbus dem elektronischen Regler 13 für die Fahrgeschwindigkeit zugeführt wird, der das Fahrzeug 1 abbremst.

Weiterhin ist es vorteilhaft, den ständig neu berechneten Abstand a zwischen der Containerwand 5 und dem Fahrträger 3 zu nutzen, um bei Anstreifgefahr das Fahrzeug abzubremsen. Je weiter sich das Fahrzeug von mittigen Sollabstand entfernt, desto mehr wird es abgebremst und hat die Möglichkeit, wieder automatisch zur Mitte hin zu lenken. Kommt der Fahrträger der Containerwand bis auf wenige Zentimeter nahe, wird ganz gestoppt, um ein Anstreifen möglichst zu vermeiden.

Aus Sicherheitsgründen wird in der elektronischen Steuerung sowohl der Lenkwinkel selbst als auch seine Änderungsgeschwindigkeit (Rampe) in Abhängigkeit von der aktuellen Fahrgeschwindigkeit variabel begrenzt, um ein plötzliches, ruckartiges Lenken bei hohen Geschwindigkeiten zu vermeiden.

### Der betriebsmäßige Ablauf erfolgt folgendermaßen:

Der Fahrer lenkt von Hand das Fahrzeug über den ersten Container des Stapels. Sobald der Laserscanner 2 zwischen den Fahrträgern 3-befindliche die Containerwand 5 detektiert hat, zeigt ein Blinklicht 11 dem Fahrer an, daß er die automatische Lenkung durch Tastendruck 11 einschalten kann. Nach-dem Einschalten geht das Blinklicht auf Dauerlicht und zeigt so an, daß die automatische Lenkung aktiv ist. Der Fahrer braucht dann nicht mehr zu lenken, sondern nur noch mit Fahrpedal und Bremse das Fahrzeug zu fahren und in Fahrtrichtung die Strecke voraus zu beobachten. Er kann, wenn nötig, jederzeit die automatische Laserlenkung ausschalten und einen Handeingriff am Lenkrad 10 vornehmen. Am Ende des Containerstapels oder bei Störungen zeigen ein akustischer Warnton und ein optisches Signal an, daß der Fahrer wieder von Hand weiter lenken muß. Erfolgt innerhalb einer kurzen Zeit keine Bewegung am Lenkrad 10, so wird das Fahrzeug automatisch mit einem Schnellhalt gestoppt.

Jedoch kann auch das "Einfädeln" über den ersten Container einer Reihe automatisch erfolgen. Bei Annäherung an den ersten Container einer Reihe kann die elektronische Steuerung schon in einiger Entfernung die Lage der Containerwand 5 an Hand der Lasermeßwerte erkennen und das Fahrzeug automatisch über den ersten Container lenken. Vorteilhaft ist es hierzu, an beiden Fahrträgern 3, also rechts und links, je einen Laserscanner 2 zu haben und deren Meßwerte in der elektronischen Steuerung 8 gegeneinander auf Plausibilität zu prüfen. So kann auch wegen der genormten Containerbreite erkannt werden, ob man sich wirklich einem Container nähert oder einem anderen Hindernis, welches nicht überfahren werden kann. Bei mehreren übereinander angeordneten Scannern für das Erfassen mehrerer übereinander gestapelter Container, die in zwei, drei oder vier Lagen gestapelt sind, sorgt ein Signal des Scanners im Bedarfsfall dafür, daß das Hubwerk so hoch fährt, daß ein schadloses Überfahren der Container mit oder ohne Last möglich oder das Fahrzeug abgebremst wird.

Will man die Lenkautomatik auch bei Rückwärtsfahrt nutzen, so muß man natürlich weitere Laserscanner hinten an den Fahrträgern anbringen.

Die vorgeschlagene Lösung hat folgende Vorteile:
- Der Portalstapler wird vollautomatisch und berührungslos einen Containerstapel entlang gelenkt, auch wenn die Container nicht präzise auf der Soll-Linie stehen, oder etwas schräg stehen, oder etwas gegeneinander versetzt sind.
- Dadurch wird der Fahrer vom anstrengenden, konzentrierten Lenken entlastet. Er kann die Fahrstrekke voraus beobachten anstatt den Fahrträger unter ihm und kann länger schneller fahren.
- Da automatisch erkannt wird, wann der Portalstapler sich über einer Containerreihe befindet, kann in-diesem Falle die vorhandene Geschwindigkeitsbegrenzung durch den Kippschutz automatisch aufgehoben werden. Das Fahrzeug kann schneller als bisher über den Stapel fahren.
- Damit steigt die Umschlagsleistung der Maschine.
- Die Gefahr des Anstreifens oder der Kollision ist vermindert.
- Der Aufwand ist geringer als beim Einsatz von vollständigen Navigationssystemen für automatisches Lenken, wie DGPS, Radarnavigation, Transponder etc.

### Liste der verwendeten Bezugszeichen

1 Portalhubstapler (Straddle Carrier)
2 Laserscanner
3 Fahrträger mit Rädern
4 Container
5 Containerwand
6 Laserstrahl
7 Laserstrahl gerade in Fahrtrichtung
8 Elektronische Steuerung zur Errechnung des Lenkwinkel-Sollwertes
9 Lenkrechner
10 Lenkrad
11 Leuchtdrucktaster
12 Hydraulisches Lenkventil
13 Elektronischer Fahrwerksregler 14 Datenleitungen oder Feldbus (z.B. CAN-Bus)

## Patentansprüche

1. Portalhubstapler (1) zum Transportieren und Stapeln von Frachtcontainern (4) mit automatischer Lenkung, bestehend aus zwei Fahrträgern (3) mit lenkbaren Rädern, zum Fahren über dem Containerstapel, **gekennzeichnet dadurch, daß**
- mindestens ein Laserscanner (2) die Entfernung zu einer Containerwand (5) aus verschiedenen Winkeln mißt und die Meßsignale einer elektronische Steuerungen (8) zuführt, welche daraus einen Lenkwinkel-Sollwert für die elektronisch geregelte Fahrzeuglenkung (9) errechnet,
- bei Detektieren der Containerwand (5) eine automatische Lenkung aktiviert wird,
- bei einer Lücke von 40 Fuß und mehr in einer Containerreihe sich die automatische Lenkung mit dem Laserscanner (2) an der Containerwand einer Nebenreihe orientiert, bis die überfahrene Containerreihe wieder vom Laserscanner (2) erfasst wird.

2. Portalhubstapler nach Anspruch 1, **dadurch gekennzeichnet, daß** der Laserscanner (2) einen 2D-Laserscanner darstellt.

3. Portalhubstapler nach den Ansprüchen 1 und 2, **dadurch gekennzeichnet, daß** ein oder mehrere Laserscanner (2) im vorderen Fahrträger (3) oder an den senkrechten Stützen in der mittleren Höhe der Containerlagen angeordnet sind.

4. Portalhubstapler nach Anspruch 3, **dadurch gekennzeichnet, daß** ein Laserscanner (2) im Rammpuffer angeordnet ist.

5. Portalhubstapler nach den Ansprüchen 1 bis 4, **dadurch gekennzeichnet, daß** der Portalhubstapler (1) bei Annäherung an eine Containerstapel nach Erfassen dessen Höhe das Hubwerk automatisch so einstellt, daß ein kollisionsloses Überfahren möglich ist.

6. Portalhubstapler nach den Ansprüchen 1 bis 5, **dadurch gekennzeichnet, daß** der Portalhubstapler (1) bei Unterschreiten eines Mindestabstandes (a) zur Containerwand (5) oder bei Annäherung an einen nicht überfahrbaren Containerstapel automatisch abbremst.

7. Portalhubstapler nach den Ansprüchen 1 bis 6, **dadurch gekennzeichnet, daß** bei Detektieren der Containerwand (5) ein Blitzlicht (11) dem Fahrer anzeigt, daß die automatische Lenkung aktivierbar ist.

8. Portalhubstapler nach einem der Ansprüche 1 bis 7, **dadurch gekennzeichnet, daß** die Meßwerte des rechten und des linken Laserscanners (2) mittels elektronischer Steuerung (8) gegeneinander auf Plausibilität geprüft werden.

## Claims

1. Straddle carrier (1) for transporting and stacking freight containers (4) with an automatic steering, consisting of two chassis beams (3) having steerable wheels, for traveling over a container stack, **characterized in that**
- at least one laser scanner (2) measures the distance to a container wall (5) from different angles and sends the measurement signals to an electronic control (8) which calculates a steering angle set value for the electronically regulated steering system (9) from the measurement signals,
- when detecting the container wall (5) an automatic steering is activated,
- in the case of a gap of 40 feet and more, in a container row, the automatic steering with the laser scanner (2) orients itself by the container wall of the adjacent row until the row being traveled over is again detected by the laser scanner (2).

2. Straddle carrier according to claim 1, **characterized in that** the laser scanner (2) is a 2D laser scanner.

3. Straddle carrier according to one of claims 1 and 3, **characterized in that** one or more laser scanners (2) are disposed in the front chassis beam (3) or on the vertical supports at medium height of the layers of containers.

4. Straddle carrier according to claim 3, **characterized in that** a laser scanner (2) is disposed in the ram buffer.

5. Straddle carrier according to claims 1 to 4, **characterized in that** the straddle carrier (1) automatically sets the lift mechanism when approaching a container stack after detecting the height of the container stack, such that a collision-free travel over the container stack is possible.

6. Straddle carrier according to claims 1 to 5, **characterized in that** the straddle carrier (1) automatically brakes when going below a minimum distance (a) from the container wall (5) or when approaching a container stack that the straddle carrier (1) cannot travel over.

7. Straddle carrier according to claims 1 to 6, **characterized in that** when detecting the container wall (5) a flashing light (11) indicates to the driver that the automatic steering can be activated.

8. Straddle carrier according to one of claims 1 to 7, **characterized in that** the measurement values of the right and left laser scanner (2) arte checked against one another for plausibility via the electronic control (8).

## Revendications

1. Chariot cavalier (1) pour le transport et l'empilage de conteneurs à fret (4), doté d'une direction automatique, se composant de deux supports de roulement (3) dotés de roues dirigeables, pour rouler sur la pile de conteneurs, **caractérisé en ce**
- **qu'**au moins un scanner laser (2) mesure la distance par rapport à une paroi de conteneur (5) selon des angles différents et transmet les signaux de mesure à une commande électronique (8) qui calcule, à partir de ceux-ci, une valeur de consigne d'angle de direction pour la direction du véhicule à régulation électronique (9),
- **qu'**une direction automatique est activée lors de la détection de la paroi de conteneur (5),
- **qu'**en cas d'un espace de 40 pieds et plus dans une rangée de conteneurs la direction automatique avec le scanner laser (2) s'oriente à la paroi de conteneur d'une rangée voisine jusqu'à la rangée passée de conteneurs est encore détectée par le scanner laser (2).

2. Chariot cavalier selon la revendication 1, **caractérisé en ce que** le scanner laser (2) représente un scanner laser à deux dimensions.

3. Chariot cavalier selon les revendications 1 et 2, **caractérisé en ce qu'**un ou plusieurs scanners laser (2) sont disposés dans le support de roulement avant (3) ou sur les appuis verticaux à la hauteur moyenne des couches de conteneurs.

4. Chariot cavalier selon la revendication 3, **caractérisé en ce qu'**un scanner laser (2) est disposé dans un butoir.

5. Chariot cavalier selon les revendications 1 à 4, **caractérisé en ce que** le chariot cavalier (1) règle automatique le mécanisme de levage lors de l'approche d'une pile de conteneurs après détection de sa hauteur de sorte qu'un franchissement sans collision soit possible.

6. Chariot cavalier selon les revendications 1 à 5, **caractérisé en ce que** le chariot cavalier (1) freine automatiquement en cas de non atteinte d'une distance minimale (a) par rapport à la paroi de conteneur (5) ou en cas d'approche d'une pile de conteneurs non franchissable.

7. Chariot cavalier selon les revendications 1 à 6, **caractérisé en ce qu'**un flash (11) indique au conducteur lors de la détection de la paroi de conteneur (5) que la direction automatique peut être activée.

8. Chariot cavalier selon l'une quelconque des revendications 1 à 7, **caractérisé en ce que** la vraisemblance des valeurs de mesure du scanner laser droit et du scanner laser gauche (2) est vérifiée l'une par rapport à l'autre à l'aide de la commande électronique (8).
